# EUROPEAN PATENT SPECIFICATION

(11) **EP 2 979 795 B1**
(45) Date of publication and mention of the grant of the patent: **08.11.2017**
(21) Application number: 13888313.7
(22) Date of filing: 30.09.2013
(51) Int. Cl.: B23B 51/06

(54) **BORING CUTTER**
BOHRMESSER
DISPOSITIF DE COUPE DE FORAGE

(30) Priority: 28.06.2013 CN 201310266451
(43) Date of publication of application: 03.02.2016
(73) Proprietor: Zhuzhou Cemented Carbide Cutting Tools Co., Ltd., Zhuzhou, Hunan 412007 (CN)
(72) Inventor: WANG, Shequan, Zhuzhou Hunan 412007 (CN); JIANG, Aisheng, Zhuzhou Hunan 412007 (CN); TANG, Aimin, Zhuzhou Hunan 412007 (CN); LIU, Min, Zhuzhou Hunan 412007 (CN)
(74) Representative: ProI European Patent Attorneys
(86) International application number: PCT/CN2013/084784
(87) International publication number: WO 2014/205948

(56) References cited:
- EP-A1- 1 941 960
- CN-A- 103 028 762
- CN-U- 202 428 004
- CN-U- 203 316 794
- DE-U1-202005 020 829
- JP-A- 2009 078 330
- JP-A- 2009 083 092
- JP-A- 2009 083 092
- JP-A- 2012 206 205
- JP-U- S 637 405
- JP-U- S5 076 489
- JP-U- S59 140 119
- US-A- 2 358 304
- US-A- 4 133 089

## Description

### BACKGROUND OF THE PRESENT INVENTION

### FIELD OF INVENTION

The present invention relates to a drilling tool according to the preamble of claim 1, which has an anti-vibration ability, and a high precision drilling structure. Such a drilling tool is known from US6000887 A.

### DESCRIPTION OF RELATED ARTS

A drilling tool generally comprises a rear fitting shaft, a front cutting head, a plurality of cutting edges extended at the cutting head, and a plurality of grooves or flutes extended at the cutting head adjacent to the flutes. During operation, the cutting head of the drilling tool is driven to rotate in order to apply a rotational cutting force at the cutting edges for making a hole or bore on a workpiece. The flutes are arranged to vent the debris generated during the drilling process from the hole being formed by the cutting edges. At the same time, the vibration is generated at a cutting end of the drilling tool is greater than that at the fitting portion, so as to cause the drilling related problems, such as the deflection of the drilling tool and drilling inefficiency. Furthermore, in order to efficiently vent the debris during the drilling process, the size of each flute will be enlarged. In other words, a diameter ratio between a core portion of the cutting head and the cutting edge will be minimized. As a result, the vibration at the cutting head will be increased to cause serious deflection of the drilling tool during the drilling process. Especially when the length of the cutting head is prolonged, the vibration at the cutting end thereof will be correspondingly increased. The drilling vibration is an important cause of premature failure of the cutting edge, low precision of hole making, and damage of workpiece surface. In severe cases, the cutting head can be broken during the drilling process. Therefore, the conventional drilling tool is designed to make a smaller hole on the workpiece in low surface quality.

JPS5076489 (U) relates to a drilling tool. JPS59140119 (U) relates to a prism apparatus for measurement which makes it possible to measure a light receiving incident angle. EP1941960 A1 relates to a workpiece that comprises a main body that extends along the main axis and has a first end section and a second end section. JP2009083092 relates to a drill used for drilling to form a machined hole in a workpiece, and in particular, a machined hole is formed in a workpiece made of a difficult-to-cut material such as stainless steel which is suitable for a drill.

US2358304 A relates to a method of making oil hole twist drills.

### SUMMARY OF THE PRESENT INVENTION

The invention is advantageous in that it provides a drilling tool, which has a simple structural configuration and can minimize the vibration of the cutting head during the drilling process, so as to ensure the quality of the hole especially for the lengthened cutting head.

Additional advantages and features of the invention will become apparent from the description which follows. According to the present invention, the foregoing and other objects and advantages are attained by a drilling tool according to independent claim 1. Further embodiments and/or improvements are recited in the dependent claims.

The discharging chambers are radially formed on the circumferential face of the tool body, wherein the discharging chambers are located and orientated on the circumferential face from the shaft handle to the cutting end in a helical manner. The flutes have the same helical angles along an axial direction of the tool body. The sizes of the discharging chambers may be orderly increased from the shaft handle to the cutting end of the tool body.

The fluid guiding grooves may be radially extended from the cooling channel to bottom walls of the discharging chambers at centers thereof respectively.

The centerlines of the fluid guiding grooves may be perpendicular to a rotational axis of the tool body.

The cutting insert may have an outer cutting face and an inner cutting face, wherein the outer cutting face of the cutting insert is located adjacent to the circumferential face while the inner cutting face of the cutting insert is located close to the rotational axis of the tool body.

Another advantage of the invention is to provide a drilling tool, wherein the discharging chambers are radially formed on the circumferential face of the tool body to communicate with the cooling channel via the fluid guiding grooves respectively. Therefore, during the drilling process, the cooling fluid is discharged from the cooling channel to the discharging chambers through the fluid guiding grooves respectively. The cooling fluid is then discharged at a gap between the tool body and the inner wall of the hole to form a dynamic cooling guidance, which can controllably adjust a pressure around the circumferential face of the tool body to minimize the tool deflection and drilling vibration. As a result, when drilling a deep hole, the cooling fluid can be discharged along the circumference face of the tool body to prevent the tool deflection and drilling vibration due to the lengthened cutting end, especially for drilling the hole with a relatively large diameter. In addition, the cooling fluid can effectively cool down the tool body during the drilling process to minimize the heat generated therefrom so as to prolong the service life span of the drilling tool.

Still further objects and advantages will become apparent from a consideration of the ensuing description and drawings.

### BRIEF DESCRIPTION OF THE DRAWINGS

Fig. 1 is a perspective view of a drilling tool according to a first preferred embodiment of the present invention.
Fig. 2 is a side view of the drilling tool according to the above first preferred embodiment of the present invention.
Fig. 3 is an elongated perspective view of the drilling tool according to the above first preferred embodiment of the present invention.
Fig. 4 is a perspective view of a drilling tool according to a second preferred embodiment of the present invention.
Fig. 5 is a side view of the drilling tool according to the above second preferred embodiment of the present invention.
Fig. 6 is an elongated perspective view of the drilling tool according to the above second preferred embodiment of the present invention.

### DETAILED DESCRIPTION OF THE PREFERRED EMBODIMENT

The following description is disclosed to enable any person skilled in the art to make and use the present invention. Preferred embodiments are provided in the following description only as examples and modifications will be apparent to those skilled in the art. The general principles defined in the following description would be applied to other embodiments, alternatives, modifications, equivalents, and applications without departing from the spirit and scope of the present invention.

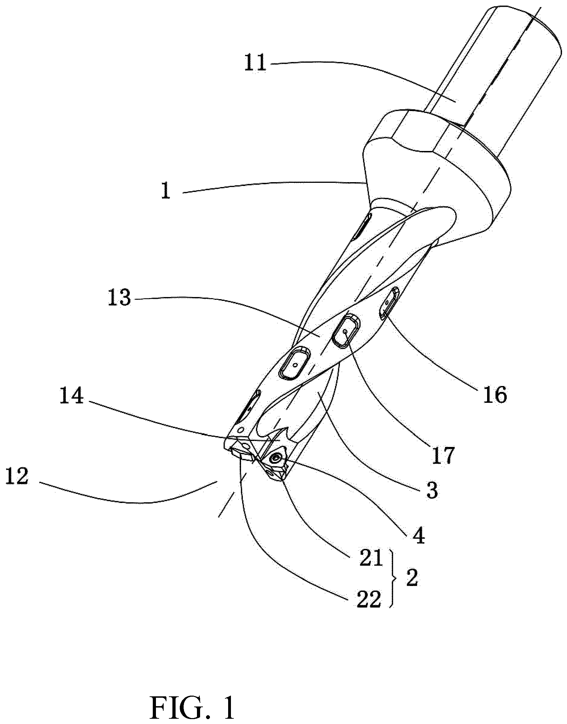

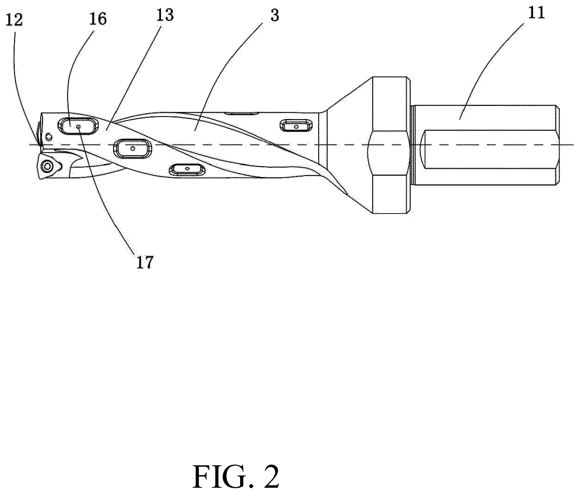

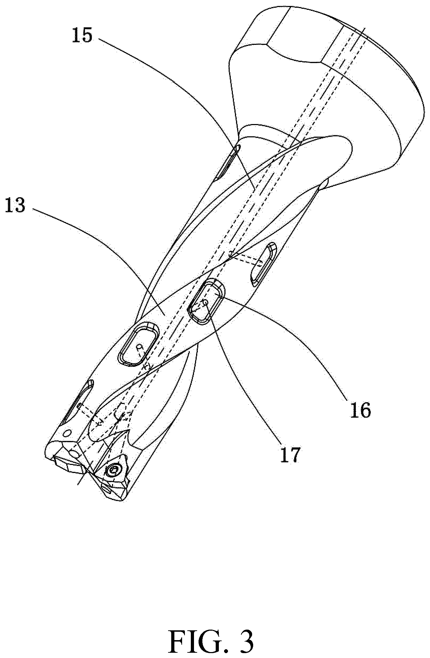

Referring to Figs. 1 to 3, a drilling tool according to a preferred embodiment of the present invention is illustrated, wherein the drilling tool comprises a tool body 1, at least a cutting insert 2, and at least a fastener 4. The tool body 1 comprises a shaft handle 11 and a cutting end 12, and defines a circumferential face 13 extended between the shaft handle 11 and the cutting end 12. The tool body 1 further has at least an insert pocket 14 extending to the cutting end 12 in a helical manner and at least a flute 3 formed on the circumferential face 13 to communicate with the insert pocket 14, wherein the cutting insert 2 is affixed at the insert pocket 14 via the fastener 4. The tool body 1 further has a cooling channel 15 extended through the shaft handle 11 to the cutting end 12, and a plurality of discharging chambers 16 spacedly formed on the circumferential face 13 to communicate with the cooling channel 15. Preferably, the cooling channel 15 is coaxially extended through the shaft handle 11 to the cutting end 12. Accordingly, during the drilling process, a cooling fluid is released to the cooling channel 15 and is discharged at the discharging chambers 16. Therefore, when the tool body 1 is rotated to drill a hole on a workpiece at the cutting end 12, the cooling fluid is discharged at a gap between the tool body 1 and the inner wall of the hole to form a dynamic cooling guidance, which can controllably adjust a pressure around the circumferential face 13 of the tool body 1 to minimize the tool deflection and drilling vibration. As a result, when drilling a deep hole, the cooling fluid can be discharged along the circumference face 13 of the tool body 1 to prevent the tool deflection and drilling vibration due to the lengthened cutting end 12, especially for drilling the hole with a relatively large diameter. In addition, the cooling fluid can effectively cool down the tool body 1 during the drilling process to minimize the heat generated therefrom so as to prolong the service life span of the drilling tool.

According to the invention, the discharging chambers 16 are radially formed on the circumferential face 13 of the tool body 1, wherein the discharging chambers 16 are located and orientated on the circumferential face 13 from the shaft handle 11 to the cutting end 12 in a helical manner. The flutes 3 have the same helical angles along an axial direction of the tool body 1. Accordingly, the tool body 1 further has a plurality of fluid guiding grooves 17 radially extended from the cooling channel 15 to bottom walls of the discharging chambers 16 respectively. Preferably, the bottom wall of the discharging chamber 16 is a flat surface. A diameter size of the fluid guiding groove 17 is smaller than a size of the discharging chamber 16, wherein the size of the discharging chamber 16 is gradually increased from the bottom wall to the circumferential face 13 of the tool body 1. In particular, the sizes of the discharging chambers 16 are orderly increased from the shaft handle 11 to the cutting end 12 of the tool body 1, such that the discharging chambers 16 have different sizes with respect to the locations thereof. In other words, the size of the discharging chamber 16 close to the cutting end 12 of the tool body 1 is larger than the size of the discharging chamber 16 at the shaft handle 11 of the tool body 1 to ensure the pressure around the cutting end of the tool body 1 is larger than the pressure away from the cutting end of the tool body 1, so as to prevent the tool deflection and to offset the less rigidity of the tool body 1 at the cutting end thereof. Accordingly, an exit end area of the fluid guiding groove 17 is smaller than a surface area of the bottom wall of the discharging chamber 16, wherein the fluid guiding grooves 17 are extended to the centers of the discharging chambers 16 respectively to ensure the cooling fluid to be evenly distributed at the discharging chambers 16, so as to ensure the pressure to be evenly applied at the tool body 1 and to stably rotate the tool body 1. The centerlines of the fluid guiding grooves 17 are perpendicular to the rotational axis of the tool body 1 to ensure the rigidity of the tool body 1 at the circumferential face 13 thereof.

According to the preferred embodiment, the cutting insert 2 has an outer cutting face 21 and an inner cutting face 22, wherein the outer cutting face 21 of the cutting insert 2 is located adjacent to the circumferential face 13 while the inner cutting face 22 of the cutting insert 2 is located close to the rotational axis of the tool body 1.

According to the preferred embodiment, the tool body 1 has two circumferential faces 13 spacedly extending in a helix manner, wherein the discharging chambers 16 are symmetrically located on the circumferential faces 13 along the rotational axis of the tool body 1 so as to ensure the cutting force thereof to evenly apply at the workpiece.

During the drilling process, a portion of the cooling fluid is discharged to a drilling zone of the workpiece through the cooling channel 15 while a portion of the cooling fluid is discharged from the cooling channel 15 to the discharging chambers 16 through the fluid guiding grooves 17 respectively. Accordingly, the inner wall of hole will seal most of the cooling fluid within the discharging chambers 16. A relatively small portion of the cooling fluid will fill at the gap between the inner wall of the hole and the circumferential surface 13 of the tool body 1 to create the pressure therearound. It is worth mentioning that the pressure is evenly and symmetrically applied around the tool body 1 with respect to the distribution of the discharging chambers 16 on the circumferential surface 13 and with respect to the rotational axis of the tool body 1. The amount of pressure at the discharging chamber 16 is selectively adjusted depending on the discharging pressure of the cooling fluid, the area of the discharging chamber 16, and the gap size between the inner wall of the hole and the circumferential surface 13 of the tool body 1. Assuming the discharging pressure of the cooling fluid and the area of the discharging chamber 16 are constant, the pressure at the discharging chamber 16 will be increased when the gap size is reduced. When there is a vibration at the tool body 1, the cooling fluid at the discharging chambers 16 will from an anti-vibration cutting torque to absorb and reduce the vibration. The anti-vibration cutting torque can be large enough to eliminate the vibration of the tool body 1, so as to enhance the drilling operation of the tool body 1 and to prevent the tool body 1 from being broken by the vibration. Since the cooling fluid dynamically flows between the inner wall of the hole and the circumferential surface 13 of the tool body 1 to create the pressure therearound, the cooling fluid further serves as a lubricant to minimize a friction between the inner wall of the hole and the circumferential surface 13 of the tool body 1. Furthermore, the pressure at the discharging chambers 16 can be controllably adjusted to prevent the offset of the cutting end 12 along the rotational axis of the tool body 1 so as to prevent the tool deflection. As a result, the drilling tool of the present invention can make a hole in a desired axial and radial dimension.

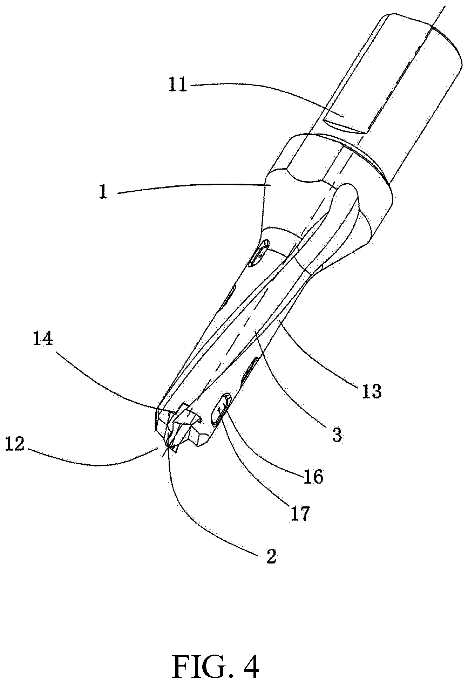

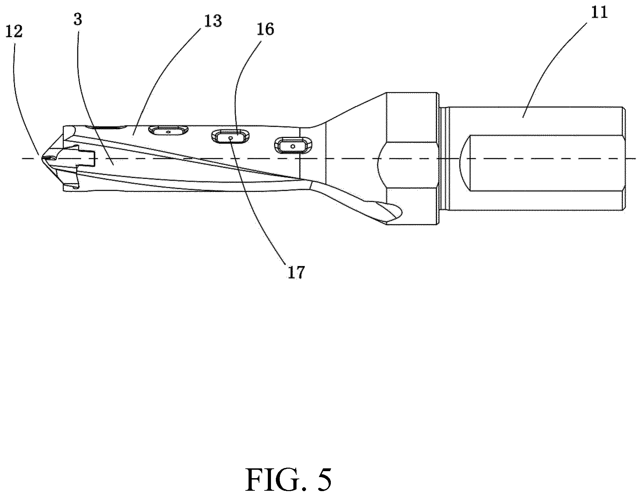

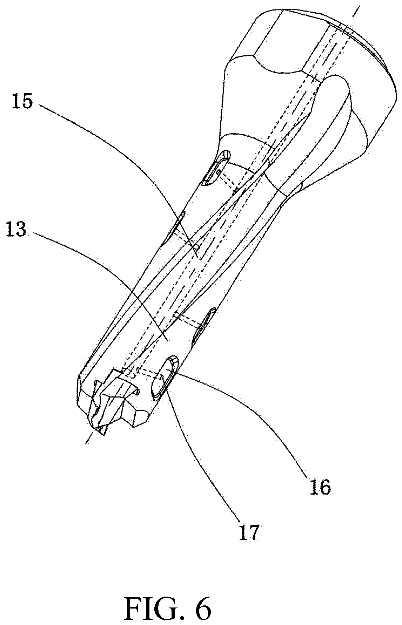

Figs. 4 to 6 illustrate an alternative mode of the cutting insert 2, wherein the cutting insert 2 is affixed at the insert pocket 14 by means of the elasticity of the insert pocket without any fastener. It is appreciated that the cutting insert 2 can be integrated at the insert pocket 14.

One skilled in the art will understand that the embodiment of the present invention as shown in the drawings and described above is exemplary only and not intended to be limiting.

It will thus be seen that the objects of the present invention have been fully and effectively accomplished. The embodiments have been shown and described for the purposes of illustrating the functional and structural principles of the present invention and is subject to change without departure from such principles.

## Claims

1. A drilling tool for drilling a hole on a workpiece, comprising a tool body (1) and a cutting insert (2), wherein said tool body (1) comprises a shaft handle (11) and a cutting end (12), and defines a circumferential face extended between said shaft handle (11) and said cutting end (12);
wherein said tool body (1) further has a insert pocket (14) extended to said cutting end (12) to secure said cutting insert (2) at said insert pocket (14), wherein said circumferential face is provided with two surfaces (13) for facilitating boring spacedly extending in a helix manner and two flutes (3) in communication with said insert pocket (14), each of the said surfaces (13) for facilitating boring extending between the two flutes (3); wherein said tool body (1) further has a cooling channel (15) extended through said shaft handle (11) to said cutting end (12), **characterised in that** a plurality of discharging chambers (16) are axially spacedly formed on said surface in a helical manner for facilitating boring to communicate with said cooling channel (15), and a plurality of fluid guiding grooves (17) are extended from said cooling channel (15) to said discharging chambers (16) respectively;
wherein said discharging chambers (16) are radially formed on each said surface (13) for facilitating boring, wherein said discharging chambers (16) are located and orientated on each said surface (13) for facilitating boring from said shaft handle (11) to said cutting end (12) in a helical manner, and wherein said flutes (3) have the same helical angles along an axial direction of said tool body (1).

2. The drilling tool, as recited in claim 1, wherein sizes of said discharging chambers (16) are orderly increased from said shaft handle (11) to said cutting end (12) of said tool body (1).

3. The drilling tool, as recited in claim 1, wherein said fluid guiding grooves (17) are radially extended from said cooling channel (15) to bottom walls of said discharging chambers (16) at centers thereof respectively.

4. The drilling tool, as recited in claim 2, wherein said fluid guiding grooves (17) are radially extended from said cooling channel (15) to bottom walls of said discharging chambers (16) at centers thereof respectively.

5. The drilling tool, as recited in claim 1, wherein centerlines of said fluid guiding grooves (17) are perpendicular to a rotational axis of said tool body (1).

6. The drilling tool, as recited in claim 2, wherein centerlines of said fluid guiding grooves (17) are perpendicular to a rotational axis of said tool body (1).

7. The drilling tool, as recited in claim 1, wherein said cutting insert (2) has an outer cutting face (21) and an inner cutting face (22), wherein said outer cutting face (21) of said cutting insert (2) is located adjacent to said circumferential face (13) while said inner cutting face (22) of said cutting insert (2) is located close to a rotational axis of said tool body (1).

8. The drilling tool, as recited in claim 6, wherein said cutting insert (2) has an outer cutting face (21) and an inner cutting face (22), wherein said outer cutting face (21) of said cutting insert (2) is located adjacent to said circumferential face while said inner cutting face (22) of said cutting insert (2) is located close to said rotational axis of said tool body (1).

## Patentansprüche

1. Bohrwerkzeug zum Bohren eines Loches an einem Werkstück mit einem Werkzeugkörper (1) und einem Schneideinsatz (2), wobei der Werkzeugkörper (1) einen Schaftgriff (11) und ein Schneidende (12) aufweist und eine Umfangsfläche definiert, die sich zwischen dem Schaftgriff (11) und dem Schneidende (12) erstreckt;
wobei der Werkzeugkörper (1) ferner eine Einsatztasche (14) aufweist, die sich zu dem Schneidende (12) erstreckt, um den Schneideinsatz (2) an der Einsatztasche (14) zu sichern, wobei zur Erleichterung des Bohrens an der Umfangsfläche zwei Oberflächen (13), welche sich nach Art einer Spirale räumlich erstrecken, und zwei Rillen (3), welche mit der Einsatztasche (14) in Verbindung stehen, ausgebildet sind, wobei sich jede der Oberflächen (13) zur Erleichterung des Bohrens zwischen den beiden Rillen (3) erstreckt;
wobei der Werkzeugkörper (1) ferner einen Kühlkanal (15) aufweist, der sich durch den Schaftgriff (11) zu dem Schneidende (12) erstreckt,
**dadurch gekennzeichnet,**
**dass** eine Vielzahl von Auslaßkammern (16) zur Erleichterung des Bohrens in Umfangsrichtung auf der Umfangsfläche angeordnet sind, um mit dem Kühlkanal (15) in Verbindung zu stehen, und sich eine Vielzahl von Fluidführungsnuten (17) jeweils vom Kühlkanal (15) zu den Ausstoßkammern (16) erstrecken;
wobei die Auslaßkammern (16) radial auf jeder der Oberflächen (13) zur Erleichterung des Bohrens ausgebildet sind,
wobei sich die Auslaßkammern (16) auf jeder Oberfläche (13) zur Erleichterung des Bohrens befinden und spiralenartig vom Schaftgriff (11) zu dem Schneidende (12) orientiert sind, und wobei die Rillen (3) entlang der Axialrichtung des Werkzeugkörpers (1) die gleichen Steigungswinkel aufweisen.

2. Bohrwerkzeug nach Anspruch 1, wobei die Größen der Auslaßkammern (16) von dem Schaftgriff (11) zu dem Schneidende (12) des Werkzeugkörpers (1) geordnet zunehmen.

3. Bohrwerkzeug nach Anspruch 1, wobei sich die Fluidführungsnuten (17) radial von dem Kühlkanal (15) zu Bodenwänden der Auslaßkammern (16) in den Mitten derselben erstrecken.

4. Bohrwerkzeug nach Anspruch 2, wobei sich die Fluidführungsnuten (17) radial von dem Kühlkanal (15) zu Bodenwänden der Auslaßkammern (16) in den Mitten derselben erstrecken.

5. Bohrwerkzeug nach Anspruch 1, wobei die Mittellinien der Fluidführungsnuten (17) senkrecht zu einer Drehachse des Werkzeugkörpers (1) verlaufen.

6. Bohrwerkzeug nach Anspruch 2, wobei die Mittellinien der Fluidführungsnuten (17) senkrecht zu einer Drehachse des Werkzeugkörpers (1) verlaufen.

7. Bohrwerkzeug nach Anspruch 1, wobei der Schneideinsatz (2) eine äußere Schneidfläche (21) und eine innere Schneidfläche (22) aufweist, wobei die äußere Schneidfläche (21) des Schneideinsatzes (2) angrenzend an die Umfangsfläche (13) angeordnet ist, wohingegen sich die innere Schneidfläche (22) des Schneideinsatzes (2) nahe einer Drehachse des Werkzeugkörpers (1) befindet.

8. Bohrwerkzeug nach Anspruch 6, wobei der Schneideinsatz (2) eine äußere Schneidfläche (21) und eine innere Schneidfläche (22) aufweist, wobei die äußere Schneidfläche (21) des Schneideinsatzes (2) angrenzend an die Umfangsfläche angeordnet ist, wohingegen sich die innere Schneidfläche (22) des Schneideinsatzes (2) nahe einer Drehachse des Werkzeugkörpers (1) befindet.

## Revendications

1. Outil de perçage destiné à percer un trou sur une pièce, comprenant un corps d'outil (1) et une plaquette de coupe (2), dans lequel ledit corps d'outil (1) comprend un manche de tige (11) et une extrémité de coupe (12) et définit une face circonférentielle (13) s'étendant entre ledit manche de tige (11) et ladite extrémité de coupe (12) ;
dans lequel ledit corps d'outil (1) présente en outre un autre poche d'insertion (14) s'étendant vers ladite extrémité de coupe (12) pour assujettir ladite plaquette de coupe (2) à ladite poche d'insertion (14), dans lequel la face circonférentielle (13) est pourvue d'une surface destinée à faciliter l'alésage et d'une goujure (3) en communication avec ladite poche d'insertion (14), la surface destinée à faciliter l'alésage étant située entre deux goujures (3) à côté l'une de l'autre ;
dans lequel ledit corps d'outil (1) présente en outre un canal de refroidissement (15) s'étendant à travers ledit manche de tige (11) vers ladite extrémité de coupe (12), dans lequel une pluralité de chambres de décharge (16) est formée axialement de manière espacée sur ladite surface d'une manière hélicoïdale destinée à faciliter l'alésage pour communiquer avec ledit canal de refroidissement (15) et une pluralité de rainures de guidage de fluide (17) qui s'étendent à partir dudit canal de refroidissement (15) vers lesdites chambres de décharge (16) respectivement ;
dans lequel lesdites chambres de décharge (16) sont formées radialement sur ladite face circonférentielle (13) du corps d'outil (1), dans lequel lesdites chambres de décharge (16) sont situées et orientées sur ladite face circonférentielle (13) à partir dudit manche de tige (11) vers ladite extrémité de coupe (12) d'une manière hélicoïdale et dans lequel lesdites goujures (3) présentent les mêmes angles hélicoïdaux le long d'une direction axiale dudit corps d'outil (1).

2. L'outil de perçage, tel que décrit dans la revendication 1, dans lequel les tailles desdites chambres de décharge (16) sont augmentées de façon ordonnée à partir dudit manche de tige (11) vers ladite extrémité de coupe (12) dudit corps d'outil (1).

3. L'outil de perçage, tel que décrit dans la revendication 1, dans lequel lesdites rainures de guidage de fluide (17) s'étendent radialement à partir dudit canal de refroidissement (15) vers les parois inférieures desdites chambres de décharge (16) au niveau des centres de celles-ci respectivement.

4. L'outil de perçage, tel que décrit dans la revendication 2, dans lequel lesdites rainures de guidage de fluide (17) s'étendant radialement à partir dudit canal de refroidissement (15) vers les parois inférieures desdites chambres de décharge (16) au niveau des centres de celles-ci respectivement.

5. L'outil de perçage, tel que décrit dans la revendication 1, dans lequel les lignes de centre desdites rainures de guidage de fluide (17) sont perpendiculaires à un axe de rotation dudit corps d'outil (1).

6. L'outil de perçage, tel que décrit dans la revendication 2, dans lequel les lignes de centre desdites rainures de guidage de fluide (17) sont perpendiculaires à un axe de rotation dudit corps d'outil (1).

7. L'outil de perçage, tel que décrit dans la revendication 1, dans lequel ladite plaquette de coupe (2) présente une surface d'attaque extérieure (21) et une face de coupe intérieure (22), dans lequel ladite surface de coupe extérieure (21) de ladite plaquette de coupe (2) est située à côté de ladite face circonférentielle (13) pendant que ladite face de coupe intérieure (22) de ladite plaquette de coupe (2) est située à proximité d'un axe de rotation dudit corps d'outil (1).

8. L'outil de perçage, tel que décrit dans la revendication 6, dans lequel ladite plaquette de coupe (2) présente une surface d'attaque extérieure (21) et une face de coupe intérieure (22), dans lequel ladite surface de coupe extérieure (21) de ladite plaquette de coupe (2) est située à côté de ladite face circonférentielle (13) pendant que ladite face de coupe intérieure (22) de ladite plaquette de coupe (2) est située à proximité dudit axe de rotation dudit corps d'outil (1).
